# EUROPEAN PATENT APPLICATION

(11) **EP 4 563 280 A1**
(43) Date of publication of application: **04.06.2025**
(21) Application number: 24214128.1
(22) Date of filing: 20.11.2024
(51) Int. Cl.: B23Q 7/00, B23Q 17/00, B23Q 7/08

(54) **POSITION DETECTION DEVICE, AIR CYLINDER, WORKPIECE UNLOADER, AND MACHINE TOOL**

(30) Priority: 30.11.2023 JP 2023203115
(71) Applicant: DMG Mori Co., Ltd., Yamatokoriyama-shi, Nara 639-1160 (JP)
(72) Inventor: MIZOKOSHI, Takuya, Yamatokoriyama-shi, 639-1160 (JP)
(74) Representative: Isarpatent

(57) **Abstract**

Provided is a position detection device that can detect movement of various actuators such as an air cylinder provided at a location where electrical wiring cannot be routed, and can be suitably used for a turret of a machine tool, for example. The position detection device detects a state where a moving object 32 that slides on a fixed object 31 is disposed at a predetermined position, and includes: a fluid filling portion 33 that is formed in the fixed object 31, and is open in a sliding surface of the fixed object 31, a pressure sensor P1 that detects a pressure of the fluid filling portion 33, a detection recessed portion 35 that is formed in the moving object 32 and is aligned with an opening 34 of the fluid filling portion 33 when the moving object 32 is disposed at a predetermined position.

## Description

### TECHNICAL FIELD

The present invention relates to a position detection device that detects a moving object being disposed at a predetermined position on a fixed object that is used for a machine tool, for example.

### BACKGROUND ART

As described in JP 2016-144850A, the applicant has filed an application for a workpiece unloader in a machine tool that uses a turret to which various tools are attached, and that is capable of setting a tool to be used, to a predetermined angle. This workpiece unloader includes a bucket that receives a machined workpiece on a workpiece spindle, a support that is fixed to a tool attachment surface, and supports the bucket and allows the bucket to swing with respect to a swing axis parallel to a rotation shaft of the turret, and an air cylinder extending in a radial direction from a protruding portion on a leading end side of the turret such that a piston rod moves forward to and backward from an engagement hole formed in a bottom surface portion of the bucket.

When a leading end portion of the piston rod moves forward to and is inserted into the engagement hole, a locked state is entered in which swing of the bucket is restricted. Conversely, when the leading end portion of the piston rod moves backward and exits the engagement hole, the bucket enters an unlocked state where the bucket can freely swing. Movement of this workpiece unloader is controlled using the turret for applying a tool to a workpiece, and thus information on whether the bucket is in the locked state or the unlocked state needs to be obtained in each step.

For this reason, a portion of the air cylinder is disposed inside the protruding portion of the turret, and a position to which the piston rod has moved forward or backward is detected using a proximity sensor disposed inside the turret.

Incidentally, there are demands for a decrease in the size and advanced functionality of turrets, and thus it has been becoming difficult to dispose a portion of a piston rod, a proximity sensor, and the like inside the protruding portion of a turret. In addition, even if they can be disposed in the protruding portion of the turret, there are cases where the turret is sealed in order to protect an electronic device or the like from a coolant or the like, and it has also been becoming difficult to route electrical wiring for obtaining signals from the proximity sensor, in such an area.

JP 2016-144850A is an example of related art.

### SUMMARY OF THE INVENTION

The present invention has been made in light of the aforementioned problem, and an object of the present invention is to provide a position detection device that can detect movement of various actuators such as an air cylinder provided at a location where electrical wiring cannot be routed, and can be suitably used for a turret of a machine tool, for example.

That is to say, a position detection device according to the present invention is a position detection device that detects a state where a moving object that slides on a fixed object is disposed at a predetermined position, and includes: a fluid filling portion that is formed in the fixed object, and is open in a sliding surface of the fixed object, a pressure sensor that detects a pressure in the fluid filling portion, and a detection recessed portion that is formed in the moving object and aligns with an opening of the fluid filling portion when the moving object is disposed at the predetermined position.

With the above configuration, the pressure in the fluid filling portion is kept at a predetermined pressure when the moving object is at a position other than the predetermined position. On the other hand, when the moving object is disposed at the predetermined position and the opening of the fluid filling portion aligns with the detection recessed portion, fluid flows from the fluid filling portion to the outside and the pressure in the fluid filling portion can be decreased. Therefore, the moving object being disposed at the predetermined position can be determined based on a decrease in the pressure that is detected by the pressure sensor. In addition, even if the fixed object and the moving object are provided at locations where it is difficult to route electrical wiring, it suffices for the pressure sensor to be provided at a distant location where the pressure sensor is in communication with the fluid filling portion and the pressure thereof propagates to the pressure sensor, and thus even at a location where a proximity sensor cannot be used as with conventional cases, the position of the moving object can be detected.

As a specific mode of position detection of the moving object that is based on a pressure, the position detection device may further include a determination device that determines that the moving object is disposed at the predetermined position when a pressure that is detected by the pressure sensor is lower than or equal to a threshold.

As a specific example to which a principle for detecting the position of the moving object according to the present invention can be suitably applied, an air cylinder may include: the position detection device according to the present invention, the fixed object that is a cylinder tube, and the moving object that is a piston rod.

In order to make it easy to cause a pressure change required for detecting a position of a leading end portion of the piston rod, the fluid filling portion may be inner piping formed in a partition wall of the cylinder tube, and the detection recessed portion may be a ring-shaped groove formed in a side surface of the piston rod.

In order to make it possible for the pressure sensor provided at a remote location to detect the pressure in the fluid filling portion and to increase the degree of freedom of configuration even in a case where the air cylinder is disposed on a rotating segment and there is only a small and sealed space where it is difficult to route electrical wiring, the inner piping may further include: a leading end-side opening that is open in a sliding surface of the cylinder tube, and a base end-side opening that is open in an end portion of the cylinder tube, a rotary joint may be provided between the pressure sensor and the base end-side opening, and the pressure sensor may be configured to detect a pressure in the inner piping via the rotary joint.

As a suitable application example of the air cylinder according to the present invention, a turret-rotating workpiece unloader that is provided on a turret of a machine tool may include: a bucket for receiving a workpiece held on a workpiece spindle, from a receiving port, a support that supports the bucket and allows the bucket to swing from a tool attachment surface of the turret in a rotation direction of the turret, and the air cylinder according to claim 3 provided between a turret head protruding in a rotation axis direction of the turret and the bucket, the workpiece unloader may be configured to be capable of switching between an unlocked state where the bucket is able to freely swing and a locked state where swing is restricted, based on forward or backward movement of the piston rod on the air cylinder, and the workpiece unloader may be used for a machine tool.

As described above, the position detection device according to the present invention does not need the sensor that requires electrical wiring to be provided near the moving object, and can detect the position of the moving object even at a location where the space is small or sealed as with the interior of the turret of the machine tool, for example.

### BRIEF DESCRIPTION OF THE DRAWINGS

FIG. 1 is a schematic diagram of a workpiece unloader according to an embodiment of the present invention and a machine tool that includes the workpiece unloader.
FIG. 2 is a schematic cross-sectional view taken along the line A-A in FIG. 1.
FIG. 3 is a schematic diagram showing an example of movement of the workpiece unloader when a bucket of the workpiece unloader is in a locked state.
FIG. 4 is a schematic diagram showing an example of movement of the workpiece unloader in a case where the bucket of the workpiece unloader is in an unlocked state.
FIG. 5 is a schematic diagram describing detection of the position of a leading end portion of a piston rod when the bucket of the workpiece unloader is in the unlocked state.
FIG. 6 is a schematic diagram describing detection of the position of the leading end portion of the piston rod when the bucket of the workpiece unloader is in the locked state.
FIG. 7 is a schematic diagram describing detection of the position of the leading end portion of the piston rod when the bucket of the workpiece unloader is in an idle stroke state.

### EMBODIMENTS OF THE INVENTION

A machine tool 200, a workpiece unloader 100, an air cylinder 3, and a position detection device according to an embodiment of the present invention will be described below with reference to the drawings.

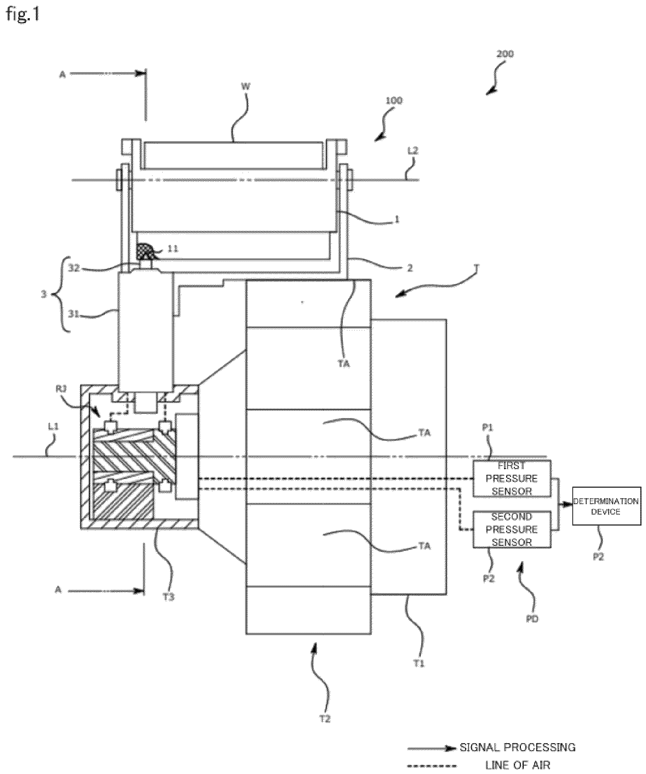

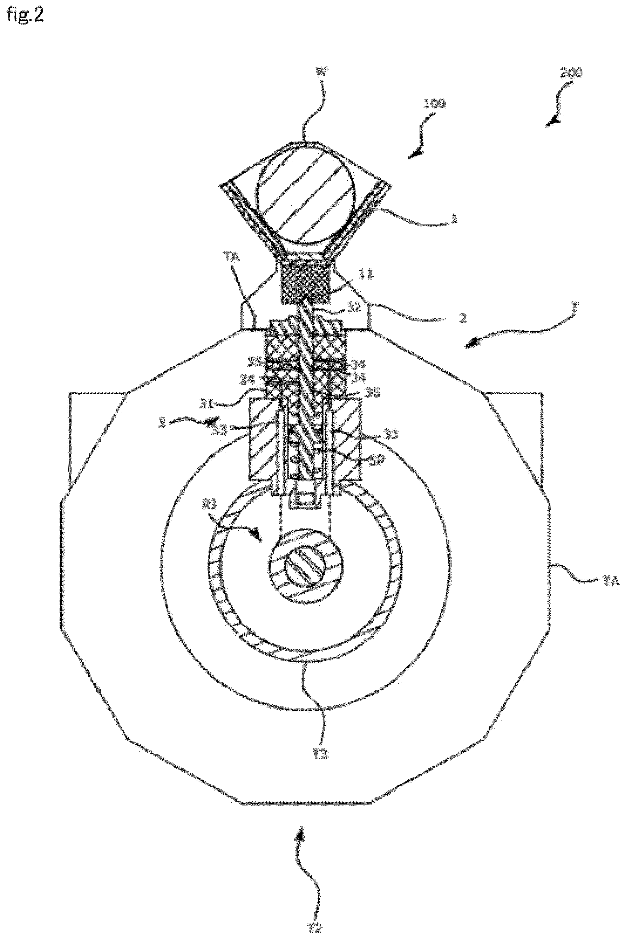

In FIGS. 1 and 2, the machine tool 200 is a multitasking lathe (multitasking machine), and includes a lathe body in which spindle headstocks are respectively disposed at two end portions, namely left and right end portions of a bed in front view, and a cutter holder is disposed between the left and right spindle headstocks, and is movable in the X axis direction and the Z axis direction, and a machine cover that surrounds the outer peripheral portion of the lathe body.

The spindle headstocks have a structure for rotatably supporting a spindle to which a chuck for holding a workpiece W is attached. This spindle is driven and rotated by a drive motor.

The cutter holder includes a cutter holder body movably supported by the bed, and a turret T mounted on the cutter holder body. This turret T has a structure in which a substantially octagonal prism-shaped turret head T2 having an outer peripheral portion on which a plurality of tools are mounted at a predetermined interval is supported such that rotary indexing can be performed by a rotary indexing table T1, and is configured such that a desired tool is rotationally indexed and positioned to a machining position (workpiece receiving position) vertically above the turret T, and the tool is clamped at the machining position. Note that the tools are attached to a tool attachment surface TA of the turret head T2 in actuality, but, for simplification, only the workpiece unloader to be described later is illustrated in the drawings, and the tools are not illustrated.

The machine tool 200 is configured to perform predetermined machining on the workpiece W held on the chuck of the spindle by applying one of the tools mounted on the turret T.

This machine tool 200 includes a workpiece ejection device for ejecting the machined workpiece W to the outside. This ejection device includes: a bucket 1 that is installed on the turret T, and receives the machined workpiece W held on the chuck at the workpiece receiving position that is the machining position, and a housing box that rotates the workpiece W in the bucket 1 to a workpiece ejection position using rotation of the turret head T2 and houses the workpiece W via a shooter.

The bucket 1 has a substantially V-shaped cross section having a receiving port and is supported by a support 2. This support 2 has a U-shape facing upward in front view, and one bottom plate portion of the support 2 is fixed to the tool attachment surface TA of the turret head T2 using a bolt. In addition, the other bottom plate portion of the support 2 is fixed to the air cylinder 3 that is provided on a later-described protruding portion T3 of the turret head T2 and protrudes in the radial direction.

The bucket 1 is supported and allowed to swing by the support 2. That is to say, the bucket 1 is supported and allowed to swing with respect to a swing axis L2 parallel to a rotation axis L1 of the turret head T2.

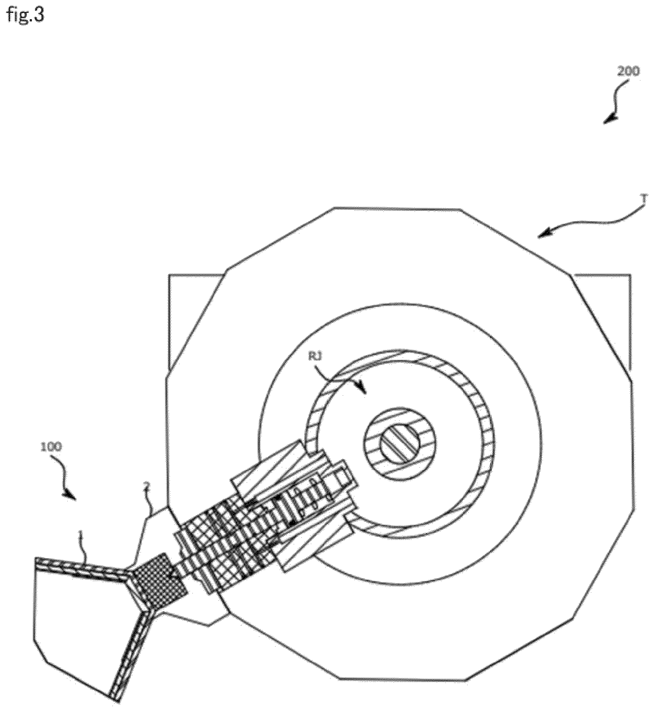

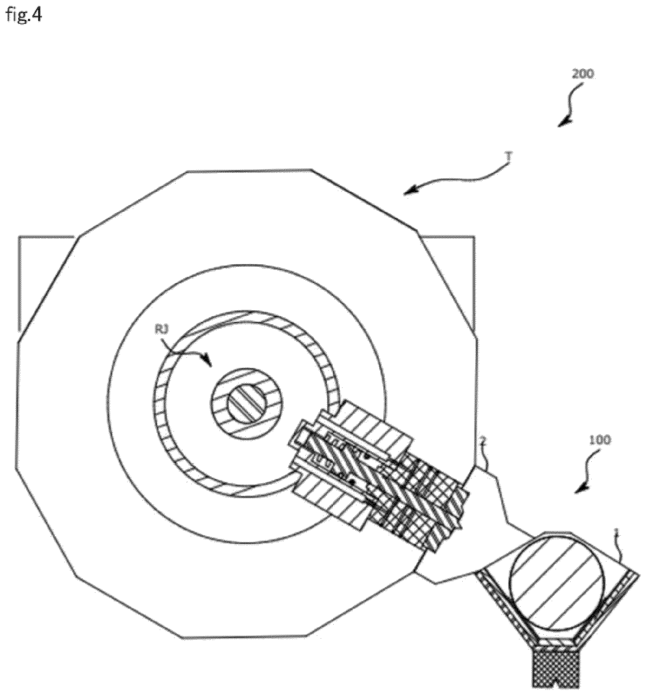

Furthermore, an engagement hole 11 is formed in a bottom surface portion of the bucket 1, and a leading end portion of a piston rod 32 that slides forward and backward on a cylinder tube 31, which is a fixed object of the air cylinder 3, is configured to move forward to or backward from the engagement hole 11. In a state where the leading end portion of the piston rod 32 is inserted into the engagement hole 11 of the bucket 1, a locked state is entered where rotation with respect to the bucket swing axis L2 is restricted. Therefore, in this locked state, even when the turret head T2 rotates with respect to the rotation axis L1, a state where the opening direction of the bucket 1 faces the outer side in the radial direction of the turret head T2 is kept as shown in FIG. 3. On the other hand, in a state where the piston rod 32 has moved backward and the leading end portion thereof is outside the engagement hole 11 of the bucket 1, the bucket 1 is in an unlocked state where the bucket 1 can freely swing with respect to the swing axis L2. In this state, as shown in FIG. 4, a configuration is adopted in which the opening of the bucket 1 faces substantially upward while the turret head T2 is rotating within a predetermined angle range. That is to say, a configuration is adopted in which, within a rotation range of the turret 2 between the workpiece receiving position and the workpiece ejection position, the opening of the bucket 1 in the unlocked state always faces upward such that the workpiece does not fall naturally.

The position detection device that detects the position of the leading end portion of the piston rod in the air cylinder 3 includes a first pressure sensor and a second pressure sensor provided outside the turret T, more specifically, near a CNC or the like, and the state of the piston rod is determined based on output of the pressure sensors. That is to say, no sensor or the like that requires electrical wiring is disposed in the turret T.

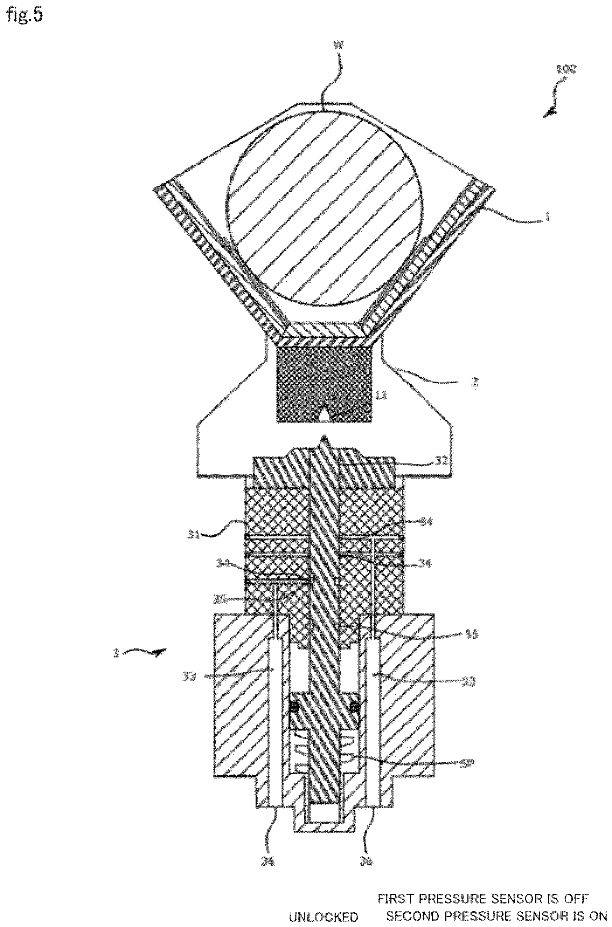

First, the position detection device that determines the position of the leading end portion of the piston rod will be described in detail with reference to FIG. 5. The cylinder tube 31 is a tubular object having a substantially annular transverse cross-section, and a sliding surface on which the leading end portion of piston rod slides is formed on at least a portion of the inner side surface of the cylinder tube 31. In addition, a fluid filling portion 33 that allows compressed air or the like to circulate and is filled with compressed air is formed in a partition wall of the cylinder tube 31, for example, as a narrow cylindrical inner conduit. The fluid filling portion 33 is formed by forming a narrow hole along the axial direction of the cylinder tube 31, forming a narrow hole in the radial direction of the cylinder tube, in a region where the sliding surface is formed, and closing an opening on the outer peripheral surface side. That is to say, the fluid filling portion 33 is a space that includes a leading end-side opening 34 that is open in the sliding surface and a base end-side opening 36 that is open in an end surface portion of the cylinder tube 31 and is disposed on the opposite side to the bucket 1. A predetermined amount of compressed air flows into the fluid filling portion 33 from the base end-side opening 36. Here, when the leading end-side opening 34 is closed by the outer peripheral surface of the piston rod, the interior of the fluid filling portion 33 is pressurized. On the other hand, an annular groove is formed in a portion of the outer peripheral surface on the leading end side of the piston rod, as a detection recessed portion 35. In a state where the leading end-side opening 34 is aligned with the detection recessed portion 35, air partially escapes from the fluid filling portion 33 to the outside, and thus, in that case, the pressure in the fluid filling portion 33 falls below a predetermined pressure.

In the present embodiment, as shown in FIG. 1, the position detection device includes a pair of fluid filling portions 33, a first pressure sensor P1 and a second pressure sensor P2 that respectively measure pressures of the fluid filling portions 33, and a determination device J that determines the position of the leading end portion of the piston rod 32 based on output from the pressure sensors P1 and P2. Here, the pressure sensors are in communication with the fluid filling portions 33, and are provided at remote locations to which the pressures of the fluid filling portions 33 can propagate, instead of being provided in or near the air cylinder 3 or the turret T. Specifically, the pressure sensors P1 and P2 are disposed on the ceiling portion of the machine tool, for example, and the pressure sensors P1 and P2 are respectively connected to the fluid filling portions 33 by flow paths. Here, as shown in FIG. 1, the protruding portion T3 of the turret T is a rotating portion, and is a sealed space, where electrical wiring cannot be routed. On the other hand, a rotary joint RJ is provided in the protruding portion T3, and it is possible to transport fluid between the outside of the protruding portion T3 and the fluid filling portion of the air cylinder 3. That is to say, the pressure sensors P1 and P2 are configured to detect pressure in the fluid filling portions 33 via the rotary joint RJ. For this reason, there is no need to provide a sensor for position detection in the protruding portion T3, and there is no need for electrical wiring for outputting signals of the sensor, or the like.

Returning to FIG. 5 again, there are three leading end-side openings 34, and are arranged along the axial direction of the air cylinder 3. In addition, two detection recessed portions 35 are provided in the piston rod. Based on combinations of the three leading end-side openings 34 and the two detection recessed portions 35 in a state of being fitted with each other, the position detection device according to the present embodiment is configured to be able to determine the position of the leading end portion of the piston rod 32 from among three positions. In FIG. 5, a state is detected where the piston rod 32 has retracted furthermost, bringing the bucket 1 in the unlocked state. That is to say, only the leading end-side opening 34 of the left fluid filling portion 33 in FIG. 5 and only the detection recessed portion 35 on the leading end side of the piston rod 32 are aligned with each other, and the two leading end-side openings 34 of the right fluid filling portion 33 are closed by the side surface of the piston rod. Therefore, the pressure that is detected by the first pressure sensor P1 is lower than a predetermined pressure, which represents an OFF state, while the pressure that is detected by the second pressure sensor P2 is higher than or equal to the predetermined pressure, which represents an ON state. When the first pressure sensor P1 is in the OFF state and the second pressure sensor P2 is in the ON state, the determination device J determines that the bucket 1 is in the unlocked state as shown in FIG. 5.

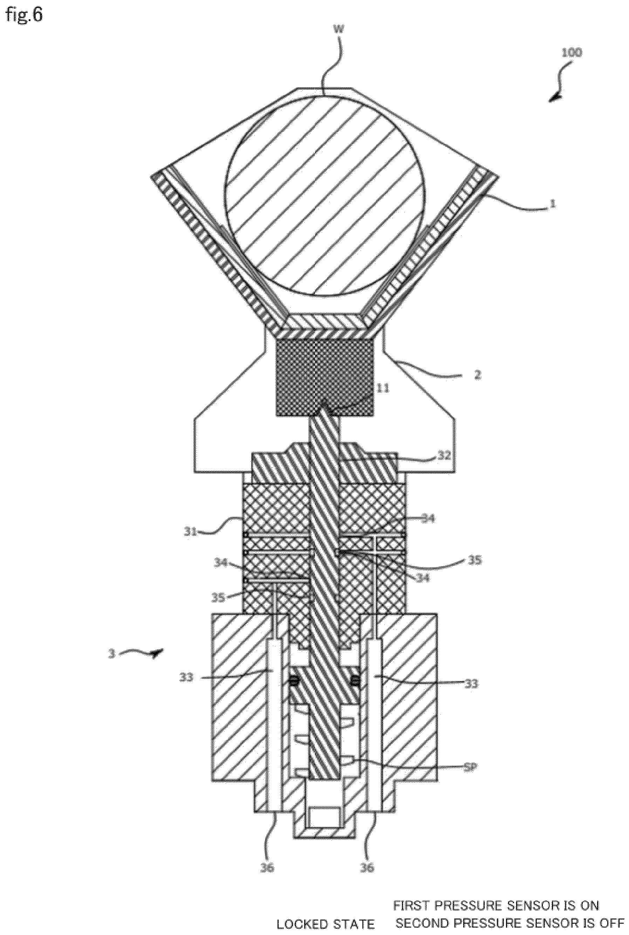

FIG. 6 shows a state where the leading end portion of the piston rod 32 is inserted into the engagement hole 11 of the bucket 1. In this case, the leading end-side opening 34 of the left fluid filling portion 33 is closed by the outer surface of the piston rod 32, and thus the pressure that is measured by the first pressure sensor P1 is higher than the threshold pressure, which represents the ON state. On the other hand, the leading end-side opening 34 on the lower side of the right fluid filling portion 33 is aligned with the detection recessed portion 35, and thus the pressure decreases, and the pressure that is detected by the second pressure sensor P2 is lower than or equal to the threshold pressure, which represents the OFF state. In the case of such a combination of output of the pressure sensors P1 and P2, the determination device J determines that the bucket 1 is in the locked state.

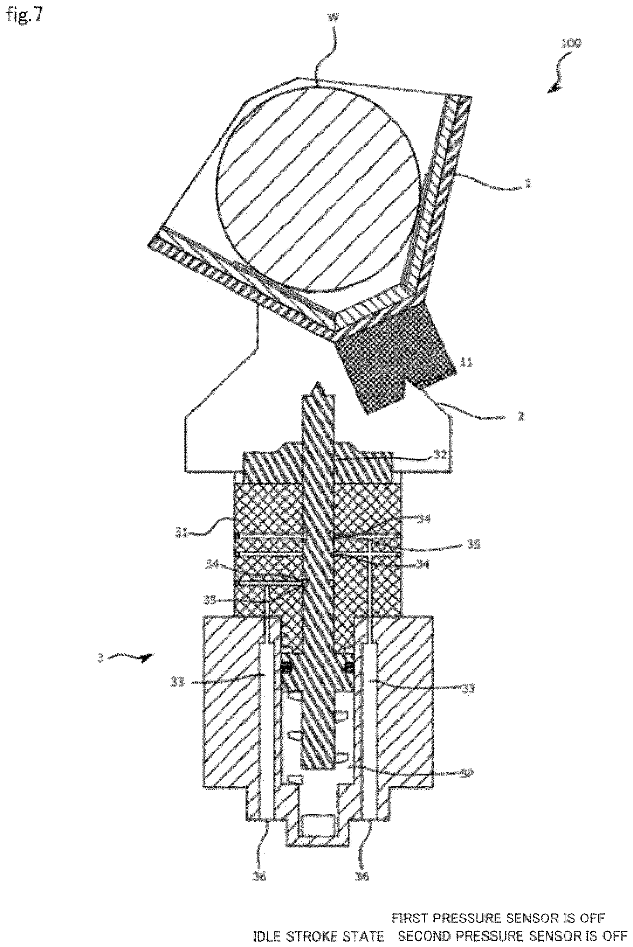

Lastly, as shown in FIG. 7, when the piston rod 32 moves forward to the maximum extent in a state where the bucket 1 is swinging, and enters an idle stroke state where the leading end portion of the piston rod 32 is not inserted into the engagement hole 11, the leading end-side openings 34 of the left and right fluid filling portions 33 are respectively aligned/fitted with the different detection recessed portions 35. In this case, both the first pressure sensor P1 and the second pressure sensor P2 are in the OFF state. In such a combination of output, the determination device J determines that an idle stroke abnormality has occurred, and causes a PLC or the like to emit an alert.

In this manner, even in a case where the air cylinder 3 is provided at a location of the turret T at which it is difficult to route electrical wiring, the workpiece unloader 100 according to the present embodiment can detect the position of the leading end portion of the piston rod 32 on the air cylinder 3 based on the pressure of fluid. Therefore, it is possible to determine that the bucket 1 is reliably in the unlocked state during an operation of ejecting the machined workpiece W, and, while the workpiece W is machined, the bucket 1 can be reliably brought into the locked state so as not to interfere with machining by a tool attached to the turret T.

Other embodiments will be described. The fluid filling portion is preferably filled with gas such as compressed air, but may be filled with liquid. In addition, the fluid filling portion may also be filled with a gas-liquid mixture. The air cylinder and the position detection device according to the present invention are not only applied to a workpiece unloader, but may also be applied to other usage in a machine tool. The shape of the detection recessed portion is not limited to an annular groove. In short, the detection recessed portion may be a cavity such as a recess that causes a decrease in the pressure in the fluid filling portion when the position of the leading end-side opening is aligned with the position of the detection recessed portion. Besides, various embodiments may be modified and combined without departing from the spirit of the present invention.

### LIST OF REFERENCE NUMERALS

- 200: Machine tool
- 100: Workpiece unloader
- 1: Bucket
- 2: Support
- 3: Air cylinder
- 31: Cylinder tube (fixed object)
- 32: Piston rod (moving object)
- 33: Fluid filling portion
- 34: Leading end-side opening
- 35: Detection recessed portion

## Claims

1. A position detection device that detects a state where a moving object that slides on a fixed object is disposed at a predetermined position, the device comprising:
a fluid filling portion that is formed in the fixed object, and is open in a sliding surface of the fixed object;
a pressure sensor that detects a pressure in the fluid filling portion; and
a detection recessed portion that is formed in the moving object and aligns with an opening of the fluid filling portion when the moving object is disposed at the predetermined position.

2. The position detection device according to claim 1, further comprising
a determination device that determines that the moving object is disposed at the predetermined position when a pressure that is detected by the pressure sensor is lower than or equal to a threshold.

3. An air cylinder comprising:
the position detection device according to claim 1 or 2;
the fixed object that is a cylinder tube; and
the moving object that is a piston rod.

4. The air cylinder according to claim 3,
wherein the fluid filling portion is inner piping formed in a partition wall of the cylinder tube, and
the detection recessed portion is a ring-shaped groove formed in a side surface of the piston rod.

5. The air cylinder according to claim 3,
wherein the inner piping further includes: a leading end-side opening that is open in a sliding surface of the cylinder tube, and a base end-side opening that is open in an end portion of the cylinder tube,
a rotary joint is provided between the pressure sensor and the base end-side opening, and
the pressure sensor is configured to detect a pressure in the inner piping via the rotary joint.

6. A turret-rotating workpiece unloader that is provided on a turret of a machine tool, the turret-rotating workpiece unloader comprising:
a bucket for receiving a workpiece held on a workpiece spindle, from a receiving port;
a support that supports the bucket and allows the bucket to swing from a tool attachment surface of the turret in a rotation direction of the turret; and
the air cylinder according to claim 3 provided between a turret head protruding in a rotation axis direction of the turret and the bucket,
wherein the workpiece unloader is configured to be capable of switching between an unlocked state where the bucket is able to freely swing and a locked state where swing is restricted, based on forward or backward movement of the piston rod on the air cylinder.

7. A machine tool that includes the workpiece unloader according to claim 6.
